# EUROPÄISCHE PATENTSCHRIFT

(11) **EP 1 069 996 B1**
(45) Veröffentlichungstag und Bekanntmachung des Hinweises auf die Patenterteilung: **03.07.2002**
(21) Anmeldenummer: 99911771.6
(22) Anmeldetag: 11.03.1999
(51) Int. Cl.: B60C 15/02, B60C 17/04

(54) **FAHRZEUGRAD MIT - INSBESONDERE EINTEILIGER-FELGE UND SCHLAUCHLOSEM LUFTREIFEN, DAS FÜR NOTLAUF GEEIGNET IST UND EIN VERFAHREN ZUR MONTAGE EINES DERARTIGEN RADES**
VEHICLE WHEEL WITH AN ESPECIALLY SINGLE-PIECE RIM AND TUBELESS TIRE SUITABLE FOR EMERGENCY USE, AND METHOD FOR MOUNTING SUCH WHEEL
ROUE DE VEHICULE, NOTAMMENT DOTEE D'UNE JANTE D'UNE SEULE PIECE ET D'UN PNEUMATIQUE SANS CHAMBRE A AIR, APPROPRIEE A UNE UTILISATION EN CAS D'URGENCE, ET PROCEDE DE MONTAGE D'UNE TELLE ROUE

(30) Priorität: 17.03.1998 DE 19811541
(43) Veröffentlichungstag der Anmeldung: 24.01.2001
(73) Patentinhaber: Continental Aktiengesellschaft, 30001 Hannover (DE)
(72) Erfinder: SERGEL, Horst, D-30657 Hannover (DE); WALLOCH, Frank, D-31228 Peine (DE); HUININK, Heinrich, D-30823 Garbsen (DE)
(86) Internationale Anmeldenummer: EP9901579
(87) Internationale Veröffentlichungsnummer: WO9947369

(56) Entgegenhaltungen:
- DE-A- 2 364 274
- DE-A- 3 000 428
- DE-A- 3 336 239
- DE-A- 3 605 803
- US-A- 1 932 191

## Beschreibung

Die Erfindung betrifft ein Fahrzeugrad mit - insbesondere einteiliger - Felge und schlauchlosem Luftreifen, das für Notlauf geeignet ist sowie ein Verfahren zur Montage eines solchen Rades.

Schlauchlose Fahrzeugluftreifen moderner Bauart sind üblicherweise an den radial inneren Enden ihrer Seitenwände zu Wülsten ausgebildet. Von Reifenwulst zu Reifenwulst erstreckt sich eine aus mit Gummi beschichteten Festigkeitsträgern ausgebildete Karkasse radialer Bauart. In jedem Reifenwulst ist ein ringförmiger, konzentrisch zur Reifenachse angeordneter zugfester, steifer Wulstkern aus Stahl ausgebildet, in dem die Karkasse verankert ist. Der Fahrzeugluftreifen wird bei der Montage des Fahrzeugluftreifens auf der Felge mit seinem Wulst auf der radial äußeren Mantelfläche der Felge befestigt. Die hohe Zugfestigkeit und Steifigkeit des Wulstes, die durch die Zugfestigkeit und Steifigkeit des Wulstkerns bewirkt wird, sichert die beim schlauchlosen Reifen gewünschte Abdichtung in der Felgen-Reifenverbindung und sichert den dichten Sitz des Reifens auf der Felge im aufgepumpten Zustand des Reifens. Die zugsteife, zugfeste Ausbildung des Wulstkerns verhindert auch bei anspruchsvollen Fahrmanövern ein axiales Abrutschen des Fahrzeugrades von der Felge über das nach radial außen gerichtete Felgenhorn.

Zur Montage bzw Demontage des Fahrzeugluftreifens muß der zugfeste, zugsteife Wulst bei einer einteiligen Felge mit seinem Innendurchmesser über den gegenüber dem Innendurchmesser des steifen Wulstes größeren Außendurchmesser des Felgenhorns bewegt werden. Um dies zu ermöglichen ist zusätzlicher Aufwand, z.B. die Ausbildung der Felge mit einem Tiefbett, erforderlich.
Im Falle des Luftdruckverlustes knickt die Reifenseitenwand ein. Dabei kann sie auf das zur axialen Sicherung des Fahrzeugluftreifens auf der Felge ausgebildete Felgenhorn gepreßt werden. Bei Weiterfahrt des Fahrzeugs kann die Reifenseitenwand und das Felgenhorn zerstört werden. Der Fahrzeugluftreifen kann von der Felge springen.

Um dies zu verhindern und um ein sicheres Weiterfahren trotz Druckluftverlust zu ermöglichen, wurde vorgeschlagen auf der radialen Außenseite der einteiligen Felge die Felge mit zusätzlichen über das Felgenhorn radial hinausragenden Notlaufstützflächen auszubilden, auf denen sich der Fahrzeugluftreifen mit seiner radialen Innenseite seines Laufflächenbereichs bei Druckluftverlust abstützt und somit Notlaufeigenschaften nach Druckluftverlust gewährleistet. Die Montage und Demontage der Fahrzeugluftreifen auf derartige Felgen erweist sich als schwierig, da die zugfesten, steifen Wülste sogar über die noch größeren Außendurchmesser der Notlaufstützflächen bewegt werden müssen und die Notlaufstützflächen den zwischen den Wulstsitzflächen auf den Felgen zum Einsatz von Montagehilfen, z. B. für die Ausbildung eines Tiefbetts, zur Verfügung stehenden axialen Raum zusätzlich beschränken. Um den steifen, zugfesten Wulst überhaupt montieren zu können ist das ausführbare Verhältnis zwischen dem Außendurchmesser der Notlaufstützfläche zu dem Innendurchmesser des zugfesten, steifen Wulstes sehr begrenzt. Der Außendurchmesser der Notlaufstützfläche darf nur so groß gewählt werden, daß der steife Wulst noch darüber bewegt werden kann. Hierdurch werden die Notlaufstützflächen zu einem großen Teil vom vergleichsweise kleinen Innendurchmesser des steifen Wulstes und somit von einem für die Notlaufeigenschaften unerheblichen Parameter bestimmt. Über für optimale Notlaufeigenschaften abgestimmte größere Außendurchmesser der Notlaufstützflächen der Felgen lassen sich die Fahrzeugluftreifen nicht mehr montieren.

Von CTS-Reifen ist es bekannt, schlauchlose Fahrzeugluftreifen mit ihren Wülsten auf Stützflächen an der radial inneren Seite der mit an der radial äußeren Seite mit Notlaufstützflächen ausgebildeten, einteiligen CTS-Felge abzustützen. In jedem Reifenwulst ist ein ringförmiger, konzentrisch zur Reifenachse angeordneter zugfester, drucksteifer Wulstkern aus Stahl ausgebildet, in dem die Karkasse verankert ist. Der CTS-Fahrzeugluftreifen wird bei der Montage des Fahrzeugluftreifens auf der Felge mit seinem Wulst auf der radial inneren Mantelfläche der Felge befestigt. Die hohe Zugfestigkeit und Drucksteifigkeit des Wulstes, die durch die Zugfestigkeit und Drucksteifigkeit des Wulstkerns bewirkt wird, sichert die beim schlauchlosen Reifen gewünschte Abdichtung in der Felgen-Reifenverbindung und sichert den dichten Sitz des Reifens auf der Felge im aufgepumpten Zustand des Reifens. Die drucksteife, zugfeste Ausbildung des Wulstkerns verhindert auch bei anspruchsvollen Fahrmanövern ein axiales Abrutschen des Fahrzeugrades von der Felge über das auf der radial inneren Seite der Felge nach radial innen gerichtete Felgenhorn. Ein solcher Reifen ist beispielsweise aus der DE-30 00 428 C2 bekannt. Ähnliche Systeme werden in der DE 33 36 239 A1 und in der DE 36 05 803 A1 beschrieben.

Da sowohl der Felgensitz als auch das Felgenhorn auf der radial inneren Seite der Felge ausgebildet sind, steht bei einem CTS-Reifen ein größerer axialer Erstreckungsbereich zur Ausbildung von Notlaufstützflächen auf der radial äußeren Mantelfläche der Felge zur Verfügung als bei dem an der radial äußeren Mantelfläche einer Felge herkömmlich befestigten Reifen-Rad-System. Das Felgenhorn stellt auf der radial äußeren Seite der CTS-Felge keinen den Notlauf störendes Felgenelement mehr dar.

Zur Montage bzw Demontage des CTS-Fahrzeugluftreifens muß der zugfeste, drucksteife Wulst mit seinem Innendurchmesser auf der radial äußeren Mantelfläche der Felge über den gegenüber dem Innendurchmesser des steifen Wulstes größeren Außendurchmesser der Notlaufstützflächen und auf der radial inneren Mantelfläche der Felge über den gegenüber dem Innendurchmesser des steifen Wulstes kleineren Innendurchmesser bewegt werden. Um dies zu ermöglichen, ist zusätzlicher Aufwand, zB die Ausbildung der Felge mit einem Hochbett auf der radial inneren Mantelfläche sowie aufwendige spezielle Montagetechniken, erforderlich.

Die Montage und Demontage der Fahrzeugluftreifen auf derartige Felgen erweist sich somit ebenso als schwierig, da auch die zugfesten, drucksteifen CTS-Wülste über die noch größeren Außendurchmesser der Notlaufstützflächen auf der radialen Außenseite der Felge und über den gegenüber dem Innendurchmesser des steifen Wulstes kleineren Innendurchmesser auf der radial inneren Mantelfläche der Felge bewegt werden müssen. Um den drucksteifen, zugfesten Wulst überhaupt montieren zu können, ist auch beim CTS-Reifen das ausführbare Verhältnis zwischen dem Außendurchmesser der Notlaufstützfläche zu dem Innendurchmesser des zugfesten, drucksteifen Wulstes noch sehr begrenzt. Der Außendurchmesser der Notlaufstützfläche darf nur so groß gewählt werden, daß der steife Wulst noch darüber bewegt werden kann. Hierdurch werden die Notlaufstützflächen auch beim CTS-Reifen noch zu einem großen Teil vom vergleichsweise kleinen Durchmesser des steifen Wulstkerns und somit von einem für die Notlaufeigenschaften unerheblichen Parameter bestimmt. Über für optimale Notlaufeigenschaften abgestimmte größere Außendurchmesser der Notlaufstützflächen der Felgen lassen sich die Fahrzeugluftreifen mit ihren steifen Wülsten nicht mehr montieren.

Aus der DE 19530939 C1 ist ein Fahrzeugrad mit einteiliger Felge und schlauchlosem, wulstlosem Luftreifen bekannt, bei dem die radial äußere Mantelfläche der Felge mit Notlaufstützflächen ausgebildet ist. Der wulstlose Fahrzeugluftreifen ist an der radial innenliegenden Mantelfläche der Felge anvulkanisiert. Die wulstfreie Ausbildung des Fahrzeugluftreifens ermöglicht bei einem solchen Reifen die Ausbildung der Notlaufstützflächen unabhängig von Wulstdurchmessern. Zur Ausbildung der Notlaufstützflächen können bei einem derartigen Fahrzeugluftreifen für den Notlauf wichtige Parameter besser berücksichtigt werden, so daß auch zur Notlaufeigenschaftsoptimierung gewünschte größere Durchmesser der Notlaufstützflächen einfach realisiert werden können. Allerdings können solche Fahrzeugluftreifen nicht ohne weiteres zerstörungsfrei demontiert oder gewechselt werden.

in der DE-OS 2364274 wurde vorgeschlagen, einen Fahrzeugluftreifen mit seinem Wülsten zwischen zwei radial voneinander beabstandete Felgenteile einer mehrteiligen Felge radial einzuklemmen. Der Wulstkern ist dehnbar, sodaß der Wulst über das an dem radial äußeren Felgenteil ausgebildeten nach radial innen gerichteten Felgenhorn besser montiert und bei Innendruck des Reifens unter Dehnung entlang der konischen Stützfläche des radial inneren Felgenteiles aufgespreizt werden kann. Die DE-OS-2364274 beschäftigt sich nicht mit Notlauf. Zwischen den Felgenteilen hat der Wulst großes axiales Spiel. Besonders im Falle des Druckluftverlustes ist nicht auszuschließen, daß der Wulstkern axial verrutscht und sogar zwischen den Felgenteilen axial herausrutscht. Sicherer Notlaufeigenschaften sind mit einer derartigen Ausbildung nicht gewährleistet.

Aus der US 1,932,191 ist ein Fahrzeugrad mit den Merkmalen des Oberbegriffs des Anspruchs 1 bekannt. Dabei ist seitlich in einer Felge ein flexibler Wulst eines Fahrzeugluftreifen mithilfe eines flexiblen, nicht metallischen zwischen Felge und Wulst ausgebildeten Klemmrings, in einer Umfangsrille befestigt. Der flexible Wulst ist mit einem Kern aus Leinentuch oder Korden verstärkt. Der Wulst ist zwar flexibel, aber aufgrund der Steifigkeit in Umfangsrichtung mit nur geringfügig veränderlicher Umfangslänge ausgebildet. Der Wulst kann somit zur Montage verbogen werden. Notlauf oder Notlaufprobleme sind in der US 1,932,191 nicht angesprochen.

Der Erfindung liegt die Aufgabe zugrunde ein Fahrzeugrad mit - insbesondere einteiliger - Felge und schlauchlosem Luftreifen, das für Notlauf geeignet ist sowie ein Verfahren zur Montage eines derartigen Fahrzeugrades zu schaffen, bei dem funktionssicher die Vorteile der CTS-Rad-Reifen-Systeme hinsichtlich ihrer zerstörungsfreien Montier- und Demontierbarkeit mit den Vorteilen des wulstlosen, anvulkanisierten Rad-Reifensystems mit der Möglichkeit der besseren Optimierung der Notlaufstützflächen verbunden werden.

Die Aufgabe wird erfindungsgemäß durch die Ausbildung eines Fahrzeugrades gemäß den Merkmalen des Anspruchs 1 sowie durch das Verfahren gemäß den Merkmalen von Anspruch 18 gelöst.

Der in seiner Umfangslänge - insbesondere elastisch - veränderbare Wulstkern ermöglicht die Montage des Wulstes durch Bewegung über die Notlaufstützfläche mit einem größeren Wulstkerndurchmesser als im befestigten Betriebszustand des Wulstes und zur Bewegung über das Felgenhorn mit einem kleineren Wulstkerndurchmesser als im befestigten Betriebszustand, sodaß die Ausbildung der Notlaufstützflächen nicht mehr in Abhängigkeit vom Durchmesser des Wulstkerns im Betriebszustand und vom inneren Felgenhorndurchmesser, sondern in erster Linie optimalen Notlaufeigenschaften entsprechend ausgebildet werden kann. Nach Einführen des Wulstes in die Ringkammer wird der Füllring radial innerhalb des Wulstes axial in die Ringkammer eingeführt,sodaß zwischen radial innerer Ringkammerwand und Füllring, zwischen Füllring und Wulst und zwischen Wulst und radial äußerer Ringkammerwand radialer Formschluß und zwischen axial innerer Ringkammerwand und Wulst und zwischen Wulst und dem die axial äußere Ringkammerwand bildenden Felgenhorn jeweils axialer Formschluß hergestellt wird. Während des Fahrzeugradbetriebes besteht sowohl im Normal- als auch im Notlaufbetrieb nach Druckluftverlust ein vollständiger Formschluß nach axial außen und innen und nach radial außen und innen zwischen einstückiger Ringkammer der Felge und Wulst. Sowohl die axialen als auch die radial auf den Wulst wirkenden Kräfte werden somit unmittelbar in die im Befestigungsbereich einstückige Felge eingeleitet. In das einzige zusätzliche Element, den Füllring, werden auch im Notlaufbetrieb keine wesentlichen axialen Kräfte eingeleitet. Auf diese Weise kann der Wulst sogar im Notlaufbetrieb sicher und zuverlässig seine Position in der Ringkammer beibehalten. Der in seiner Umfangslänge veränderbare Wulst kann somit in einfacher und funktionssicherer Weise sowohl montiert als auch demontiert werden wobei sowohl die Notlaufstüzflächen für den Notlauf optimiert als auch das Felgenhorn hinsichtlich der axialen Stütze für den Wulst und der Wulstkern in seinem Betriebszustand hinsichtlich seiner Eigenschaften im Betriebszustand optimiert werden können. Besonders sicher ist die Krafteinleitung in die Felge, wenn der Wulst über seine ganze axiale Erstreckung nach radial innen vollständig auf dem Füllring aufliegt. Wenn der Wulst und der Füllring die Ringkammer vollständig ausfüllen, wird ein besonders zuverlässiger Formschluss zwischen Wulst und Felge erzielt. Durch Ausbildung des Fahrzeugluftreifens mit elastisch veränderbarer Umfangslänge des Wulstes ist besonders einfach und sicher eine Umfangslängenveränderung von einer ersten Umfangslänge zu individuell entsprechend den jeweiligen Erfordernissen geänderten weiteren Umfangslängen entgegen der Wirkung rückstellender Kräfte und wieder zurück in die erste Umfangslänge unter Ausnützung der rückstellenden Kräfte erzielbar.

Besonders vorteilhaft ist eine Ausbildung des Fahrzeugrades, bei dem der Wulstkern ein im Wulst integriert ausgebildeter Gummikern ist. Der Gummikern ist einfach herzustellen und kann besonders einfach und zuverlässig im Wulst verankert werden. Der Wulst kann hierdurch in einfacher, zuverlässiger Weise in seiner Umfangslänge elastisch dehnbar ausgebildet werden. Für einen besonders sicheren Sitz ist der Gummikern mit einer Shore - A- Härte aus dem Bereich von 80 bis 100 - bevorzugt aus dem Bereich zwischen 85 bis 90 ― ausgebildet.

In einer anderen Ausbildungsform des Fahrzeugrades ist der Wulst vollständig kernlos ausgebildet. Der Wulst ist besonders einfach ohne zusätzlichen Aufwand für einen Kern herzustellen, ist durch sein kernloses Gummimaterial in seiner Umfangslänge ausreichend elastisch dehnbar auszubilden und kann dennoch sicher und zuverlässig durch den Formschluß in der Ringkammer verankert werden.

Die Ausbildung gemäß den Merkmalen des Anspruchs 7 ermöglicht eine besonders einfache und zuverlässige Montage und Demontage des Fahrzeugluftreifens auf der Felge. Nachdem der Wulst in seine Befestigungsposition in der Ringkammer eingeführt worden ist, wird er durch einfaches axiales Verschieben des Füllrings auf der hierzu ausgebildeten Lagerfläche der Ringkammer in seine Füllposition in der Ringkammer geschoben, wodurch der vollständige Formschluß des Wulstes in der Ringkammer hergestellt und gesichert wird. Durch einfaches axiales Herausziehen des Füllrings aus seiner Füllposition wird der Formschluß aufgehoben, so daß der Wulst aus der Ringkammer entfernt und der Fahrzeugluftreifen von der Felge demontiert werden kann.

Durch die Ausbildung gemäß den Merkmalen von Anspruch 8 kann zusätzlich radialer Formschluß zwischen unmittelbar an den Wulst anschließendem Seitenwandbereich und Felgenhorn und zwischen unmittelbar an den Wulst anschließendem Seitenwandbereich und Füllring und somit zur Felge zumindest im Duchdringungsbereich durch die Öffnung erzielt werden. Die Verankerung des Wulstes in der Felge wird hierdurch noch sicherer. Darüberhinaus wird der Zugang zum Füllring von außen hierdurch erleichtert, sodaß Montage und Demontage vereinfacht werden.

Durch die konisch erweiterte Ausbildung der radial äußeren Mantelfläche des Füllrings in seiner Erstreckung außerhalb der Ringkammer gemäß den Merkmalen von Anspruch 10 wird die Reifenseitenwand im Felgenhornbereich zusätzlich sichergestellt, daß der Verlauf der unteren Reifenseitenwand im axial außen an das Felgenhorn anschließenden Bereich mit einer nach radial außen gerichteten Richtungskomponente behaftet. Auf diese Weise wird zusätzlich der Formschluß zwischen Reifenwulst und Felge gesichert. Besonders vorteilhaft ist es, wenn der Füllring die Reifenseitenwand im unmittelbaren Anschlußbereich an das Felgenhorn zusätzlich Steifigkeit verleiht. Um dies zu erreichen, ist es vorteilhaft im unmittelbaren Anschluß an das Felgenhorn axial außerhalb des Felgenhorn, die radial äußere Kontur des Füllrings mit einer zur Reifenseitenwandkontur in diesem Bereich korrespondierenden Krümmungsverlauf auszubilden. Bevorzugt ist das Fahrzeugrad derart ausgebildet, daß die axial äußere Stirnfläche als eine axiale Auflagefläche zur axialen Stütze der unteren Reifenseitenwand ausgebildet ist. Auf diese Weise ist der Reifen bei Kurvenfahrten im unteren Seitenwandbereich zur Erzielung guter Handlingeigenschaften axial gestützt und kann bei besonderen Stoßbelastungen unter Aufhebung der axialen Stützwirkung bis in den unteren Seitenwandbereich zur Erzielung guter Komforteigenschaften einfedern.

Besonders sicher ist die Befestigung des Reifens gemäß den Merkmalen des Anspruchs 11.

Besonders vorteilhaft, weil einfach herzustellen, zu montieren und zu demontieren ist die Ausbildung gemäß den Merkmalen von Anspruch 12. Durch die zylindriche Ausbildung der radial äußeren Mantelfläche des Füllrings wird darüberhinaus zusätzlich besonders zuverlässig ein Einleiten axialer Kräfte vom Wulst in den Füllring verhindert, sodaß die Verankerung des Wulstes noch zuverlässiger wird.

Durch die Ausbildung eines Fahrzeugrades, bei dem der größte Außendurchmesser der Notlaufstützflächen um einen Faktor zwischen 1,05 und 1,3 größer als der Innenringdurchmesser des Wulstkerns im montierten Zustand des Fahrzeugrades beträgt, ermöglicht optimale Notlaufeigenschaften durch besonders großen Außendurchmesser der Notlaufstützflächen bei Beibehaltung der zur Erzielung guter Einfederung des Reifens und somit guter Komforteigenschaften optimaler kleiner Innenringdurchmesser des Wulstkerns. Die Ausbildung eines Fahrzeugrades, bei dem der größte Außendurchmesser der Notlaufstützflächen um einen Faktor zwischen 1,1 und 1,2 größer als der Innenringdurchmesser des Wulstkerns im montierten Zustand des Fahrzeugrades beträgt, stellt einen opimale Ausbildungsbereich der Standardreifendimensionen zur Lösung der Zielkonflikte zwischen gute Notlaufeigenschften einerseits und Komfort und Gewicht des Fahrzeugrades andererseits dar.

Die Ausbildung eines Fahrzeugrades, bei dem der Wulstkern eine Dehnbarkeit und/oder Stauchbarkeit von 5 bis 30 % aufweist, ermöglicht eine einfache und zuverlässige Montage trotz optimaler Notlaufeigenschaften durch Ausbildung besonders großer Außendurchmesser der Notlaufstützflächen trotz Beibehaltung der Ausbildung der Erzielung guter Einfederung des Reifens und somit guter Komforteigenschaften durch optimal kleine Innenringdurchmesser des Wulstkerns. Durch einfaches ― insbesondere elastisches - Dehnen und/oder Stauchen des Wulstes wird der Wulst jeweils auf den zur Montage bzw zur Demontage über die Notlaufstützflächen erforderlichen optimalen Durchmesser, auf den zur Montage bzw zur Demontage über das nach innen gerichtete Felgenhorn erforderlichen optimalen Durchmesser und auf den zum sicheren Sitz in der Ringkammer erforderlichen optimalen Durchmesser eingestellt. Die Ausbildung eines Fahrzeugrades, bei dem der Wulstkern eine Dehnbarkeit und/oder Stauchbarkeit von 10 bis 20 % ermöglicht eine einfache und zuverlässige Montage bei opimalem Ausbildungsbereich der Standardreifendimensionen zur Lösung der Zielkonflikte zwischen guten Notlaufeigenschaften einerseits und Komfort und Gewicht des Fahrzeugrades andererseits.

Bevorzugt ist die Ausbildung gemäß den Merkmalen von Anspruch 15, wonach der Wulstkern eine Dehnbarkeit von 5 bis 30 % und eine Stauchbarkeit von 1 bis 5% aufweist und wonach der Wulstkern insbesondere im montierten Zustand des Fahrzeugrades ungedehnt und ungestaucht ist. Durch einfaches ― insbesondere elastisches - Dehnen aus dem ungedehnten und ungestauchten Zustand wird der Wulstkern auf einen zur Montage bzw Demontage über die Notlaufstützfläche optimal großen Durchmesser gebracht. Durch einfaches - insbesondere elastisches - Stauchen aus dem ungedehnten und ungestauchten Zustand wird der Wulstkern auf einen zur Montage bzw Demontage über das nach innen gerichtete Felgenhorn optimal kleinen Durchmesser gebracht. Die Ausbildung eines Fahrzeugrades, bei dem der Wulstkern eine Dehnbarkeit 10 bis 20 % und eine Stauchbarkeit von 2,5 bis 3,5 % aufweist, ermöglicht eine einfache und zuverlässige Montage bei opimalem Ausbildungsbereich der Standardreifendimensionen zur Lösung der Zielkonflikte zwischen guten Notlaufeigenschaften einerseits und Komfort und Gewicht des Fahrzeugrades andererseits.Besonders vorteilhaft ist es, wenn der Wulstkern im montierten Zustand des Fahrzeugrades ungedehnt und ungestaucht ist und somit in Umfangsrichtung weitgehend frei von in Umfangsrichtung wirkenden inneren Kräften ist. Besonders vorteilhaft ist hierbei die elastische dehnbare und elastisch stauchbare Ausbildung. Der Wulstkern wird aus dem ungedehnten und ungestauchten Zustand zur Montage über die Notlaufstützflächen den elastischen Rückstellkräften entgegenwirkend in Umfangsrichtung gedehnt. Nach der Montage über die Notlaufstützflächen wird er duch die Rückstellkräfte wieder in seiner Umfangslänge bis in den ungedehnten und ungestauchten Zustand verkleinert. Zur Montage über das radial nach innen gerichtete Felgenhorn wird der Wulstkern aus dem ungedehnten und ungestauchten Zustand den elastischen Rückstellkräften entgegenwirkend in Umfangsrichtung gestaucht. Nach der Montage über das Felgenhorn wird er in der Ringkammer duch die Rückstellkräfte wieder in seiner Umfangslänge bis in den ungedehnten und ungestauchten Zustand vergrößert. In entsprechenderweise erfolgt die Demontage.

Die Ausbildung gemäß den Merkmalen von Anspruch 17 ermöglicht eine besonders zuverlässige, einfach handhabbare Ausbildung eines Füllrings. Die im wesentlichen in Umfangsrichtung gerichteten gummierten Festigkeitsträger ― multifilamentartig oder monofilamentartig - aus Stahl oder textiler Bauart gewährleisten eine sichere, zuverlässige Beibehaltung des Sitzes des Füllrings auf der Lagerfläche in der Ringkammer und ausreichend Elastizität zur axialen Montage und Demontage. Besonders einfach herzustellen ist die Ausbildung des Füllrings aus einem um die Achse des Füllrings wendelförmig gespulten, kontinuierlichen Festigkeitsträgers.

Die Erfindung wird im folgenden anhand der in den Figuren 1 bis 4 dargestellten Ausführungsbeispiele näher erläutert. Hierin zeigen
- Fig. 1: eine Querschnittsdarstellung eines erfindungsgemäßen Fahrzeugrades mit montiertem Fahrzeugreifen,
- Fig. 2: Querschnittsdarstellungen von Ausführungsformen des Füllrings,
- Fig. 3: Querschnittsdarstellungen von Ausführungsformen des Wulstbereichs,
- Fig.4: schematische Darstellung zur Erläuterung der Montage und der Demontage.

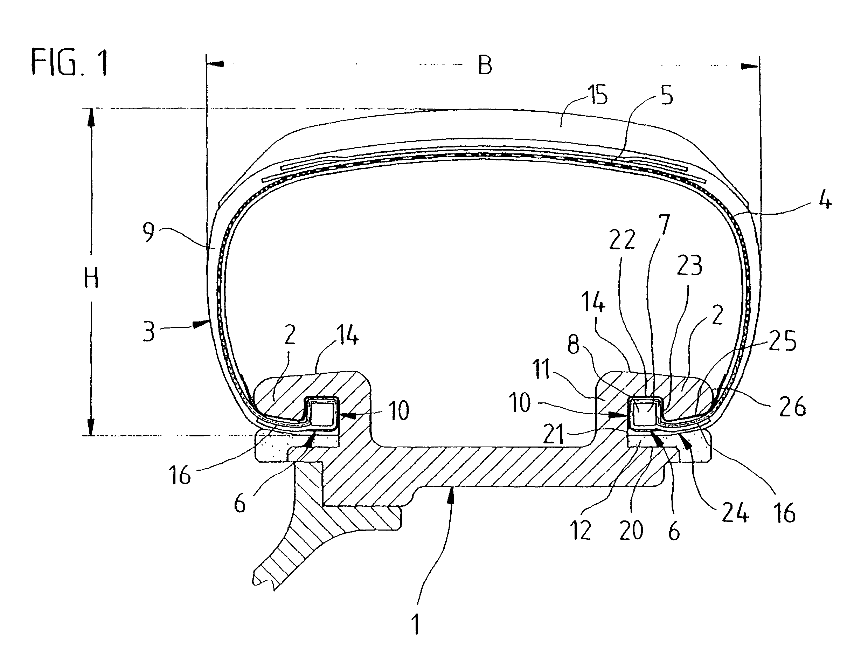

Fig. 1 zeigt ein Fahrzeugrad mit Fahrzeugluftreifen 3 und Felge 1 mit einem Verhältnis von maximaler Höhe H zu maximaler Breite B des Fahrzeugluftreifens H/B ≤ 0,6. Der Fahrzeugluftreifen 3 weist eine über den Umfang des Reifens und vom linken Wulstbereich 6 des Fahrzeugluftreifens zum rechten Wulstbereich 6 reichende, nicht näher dargestellte, Innenschicht auf, über die eine Karkasse 4 radialer Bauart mit beispielsweise einer oder zwei Karkassenlagen aufgebaut ist. Im Bereich der Lauffläche ist radial außerhalb der Karkasse 4 ein Gürtel 5 bekannter Bauart mit beispielsweise zwei Gürtellagen aus in Kautschuk eingebetteten Festigkeitsträgern, z.B. aus Stahlcord, aufgelegt. Der Gürtel reicht über den gesamten Umfang des Reifens hinweg und erstreckt sich in axialer Richtung von einem Reifenschulterbereich in den anderen.

Die Stahlcorde verlaufen im spitzen Winkel von beispielsweise 10-30 ° zur Umfangsrichtung. Radial außerhalb der Gürtellagen ist es denkbar, eine nicht dargestellte Gürtelbandage mit im wesentlichen zur Umfangsrichtung verlaufenden Festigkeitsträgern, beispielsweise aus Nylon, aufzuwickeln.

Radial außerhalb des Gürtels bzw. der Gürtelbandage ist in bekannter Weise ein über den Umfang des Reifens reichender und sich von Schulterbereich zu Schulterbereich erstreckender Laufstreifen 15 aus Kautschukmaterial aufgelegt. Im Seitenwandbereich 9 ist Kautschukmaterial auf die Karkasse 4 aufgelegt. Das Seitenwandkautschukmaterial reicht vom Schulterbereich bis zum Wulstbereich 6.

Die einstückig ausgebildete Felge 1 ist an ihren beiden axialen Stirnseiten jeweils mit einer konzentrisch zur Felge angeordneten Ringkammer 10 mit einer radial inneren Ringkammerwand 20, einer axial inneren Ringkammerwand 21, einer radial äußeren Ringkammerwand 22 und einer axial äußeren Ringkammerwand 23 einstückig ausgebildet. Die Ringkammerwand 23 begrenzt das radial nach innen gerichtete Felgenhorn 2. Axial nach innen zwischen Felgenhorn 2 und radial innerer Ringkammerwand 20 ist eine ringförmige Durchgangsöffnung 24 von axial außen zur Ringkammer hin ausgebildet. Das Felgenhorn 2 ist an seiner radial nach innen gerichteten Seite 25 von axial innen nach axial außen konisch erweitert und an seiner Stirnfläche 26 gekrümmt ausgebildet. Auf der radial äußeren Seite des Felgenhorns erstreckt sich ein Notlaufsattel 11 mit seiner Notlaufstützfläche 14 (oder Notlaufsatteloberfläche 14) nach axial innen über die Position der Ringkammer 10 hinweg. Jede Notlaufstützfläche 14 erstreckt sich soweit nach axial innen, daß der Gürtel in seinen axialen Randzonen von der Schulter jeweils mit 10 bis 30 %, beispielsweise 25%, axial überdeckt ist.

Der Fahrzeugluftreifen 3 umgreift mit seinen unteren Seitenwandbereichen 16 die nach radial innen erstreckten Hörner 2. Die Krümmung der Stirnfläche 6 des Horns entspricht der gewünschten Reifenkontur im Bereich des Horns.

Am Ende des unteren Seitenwandbereiches 16 ist jeweils der Wulstbereich 6 mit zur Innenseite des Reifens ausgebildeter wulstartiger Verdickung 7 ausgebildet. Der Wulst ist mit einem in das Karkassenlagenende eingebetteten elastisch dehnbaren und elastisch stauchbaren Kern 8 ausgebildet. Im montierten Zustand gemäß Fig. 1 füllt der Wulstbereich 6 unter Formschluß zur axial inneren Ringkammerwand 21 und zur radial äußeren Ringkammerwand 22 sowie zur axial äußeren Ringkammerwand 23 ca. 1/2 bis 2/3 des Ringkammerraums. Radial innerhalb des Wulstes ist ein Füllring 12 radial formschlüssig zum Wulstbereich 6 nach radial außen und nach radial innen zur radial inneren Ringkammerwand 20 ausgebildet, der sich in axialer Richtung von der Ringkammerwand 10 über die gesamte axiale Erstreckung des Wulstbereichs 6 durch die Ringöffnung 24 hindurch nach axial außen erstreckt. Der Füllring 12 ist über den gesamten axialen Erstreckungsbereich der Ringkammer und somit des Wulstes an seiner radial äußeren Mantelfläche zylindrisch und axial außerhalb der Ringkammer parallel zur radial inneren Seite des Felgenhorns 25 konisch erweitert ausgebildet. In der Ausführung von Fig.1 erstreckt sich der Füllring 12 in axialer Richtung bis hin zur axialen Position der Stirnseite 26 des Felgenhorns. Der Wulst steht in der Ausführung gemäß Fig. 1 unter Formschluß nach radial außen, nach axial innen und nach axial außen zu den geschlossenen Ringkammerwänden 22, 23, 21 und durch den radialen Formschluß zum Füllring 12, der seinerseits in radialem Formschluß zur geschlossenen Ringkammerwand 20 ausgebildet ist, auch zur Ringkammerwand 20 in radialem Formschluß. Da der Wulst auf seiner gesamten Oberfläche in formschlüssigem Berührkontakt zur einstückig ausgebildeten Ringkammer bzw. zum Füllring 12 und der Füllring 12 innerhalb der Rinkammer seinerseits mit seiner Oberfläche in vollständigem Berührkontakt zu den Ringkammerwänden bzw. zum Wulst ausgebildet ist, ist die Ringkammer vollständig von Wulst und Füllring ausgefüllt. Darüber hinaus steht der untere Seitenwandbereich 16 mit der radial inneren konischen Felgenhornseite 25 und mit der korrespondierend ausgebildeten konischen äußeren Mantelfläche des Füllrings 12 auch im axialen Erstreckungsbereich des Felgenhorns in vollständigem Berührkontakt.

Der vollständige Formschluß des Wulstes zur Felge sichert den Sitz des Reifens auf der Felge während des Fahrens.

Im Bereich der Stirnfläche 26 des Horns 2 der Felge liegt die Reifenseitenwand jeweils lediglich unter Vorspannung an.

Bei Auflage eines Umfangselementes des Reifens auf die Straßenoberfläche wirken resultierende Normalkräfte F zwischen Fahrzeugluftreifen und Straßenoberfläche. Bei der Eindämpfung dieser Kräfte wirkt auf die Seitenwände 9 des Reifens eine resultierende Kraft F_{A}, die im wesentlichen in axialer Richtung wirkt und die Seitenwand leicht weiter verkrümmt. Aufgrund der gewählten Vorspannung zwischen Stirnfläche 26 und Reifen liegt der Reifen in diesem Normallastfall unter Reduzierung der Vorspannung immer noch an der Stirnfläche 26 an. Bei Kurvenfahrten wird im Bereich der besonders stark belasteten Kurvenaußenseite aufgrund der eingeleiteten Kräfte die Vorspannung zwischen Stirnfläche 26 und Reifenseitenwand erhöht. Der Fahrzeugluftreifen 3 wird somit an der besonders stark belasteten Seite durch das Horn versteift. Ein sicheres Handling ist gewährleistet.

Bei starken Stoßwirkungen auf den Reifen wirken stärkere resultierende Kräfte F_{A} auf die Reifenseitenwände. Diese beulen weiter nach axial außen bei der Eindämpfung aus. Der für die flexible Krümmung der Seitenwand hierzu zur Verfügung stehende Seitenwandbereich reicht dabei vom Schulterbereich des Laufstreifens bis über den gesamten gekrümmten Bereich der Stirnfläche 26. Bei starken Stößen hebt die Reifenseitenwand 9 im Bereich der Stirnfläche 26 unter Bildung eines Spaltes zwischen Stirnfläche 26 und Reifenseitenwand ab.

Auch besonders starke auf den Reifen einwirkende Stöße können aufgrund des großen Krümmungsradius R und der sehr langen für die Krümmung zur Verfügung stehenden Bogenlänge der Reifenseitenwand zwischen Reifenschulter und zylindrischer Felgenoberfläche unter geringer Flächenbeanspruchung der gekrümmten Seitenwandoberflächen sicher eingedämpft werden.

Der nach axial innen reichende Notlaufsattel 11 erstreckt sich über den gesamten Umfangsbereich des Reifens. Bei plötzlichem Innendruckverlust stützt sich der Reifen mit seinem Laufstreifenbereich auf den beiderseitig vorgesehenen, mit im wesentlichen zylindrischer oder nach axial innen mit leicht konisch erweiterter Oberfläche mit einem Steigungswinkel von 0 bis 10 ° zur Achsrichtung ausgebildeten Notlaufsattel 11 ab. Frühzeitige Zerstörung und Ablösung des Reifens werden vermieden.

Ebenso ist es denkbar, die radial äußere Oberfläche der Notlaufstützflächen mit zusätzlichem Stützmaterial zu belegen. Das zusätzliche Stützmaterial ist aus hartem Kunststoff, Gummi oder Kunststoffschaum ausgebildet, das zur Dämpfung unempfindlich gegen Stöße ist und das gute Gleiteigenschaften für den Notlauf aufweist.

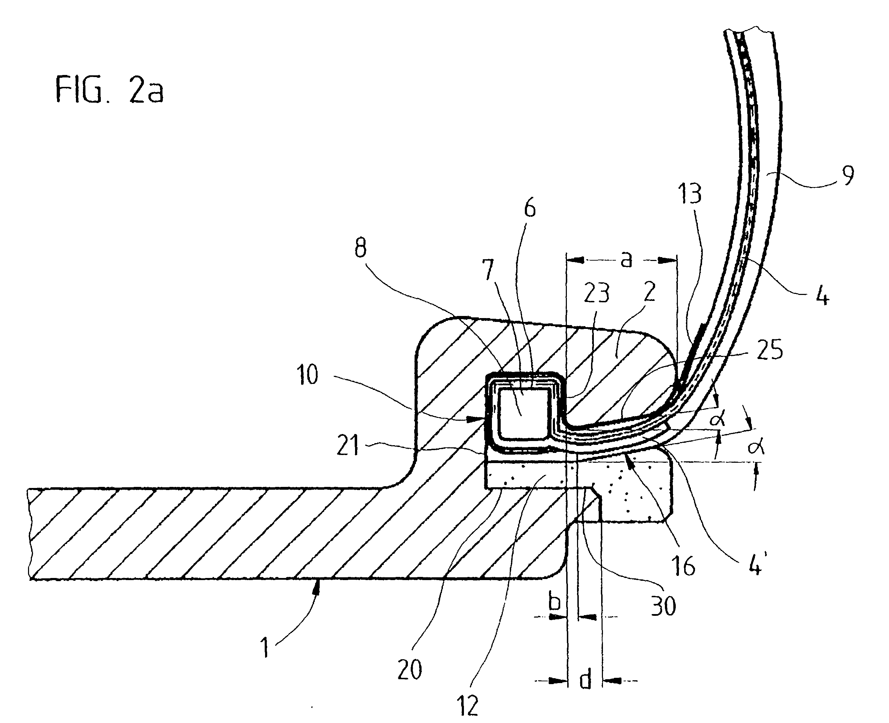

Fig. 2a zeigt eine vergrößerte Detaildarstellung des äußeren Randbereichs der Felge von Fig.1. In Fig.2a ist erkennbar, daß sich die Innenseite 25 des Felgenhorns von der Ringkammerwand 23 ausgehend unter Einschluß eines Winkels α zur Radachse nach axial außen hin bis zur gekrümmten Stirnfläche 26 des Felgenhorns 2 konisch erweitert. Die radial äußere Mantelfläche des Füllrings 12 ist von der Ringkammerwand 21 ausgehend über den gesamten axialen Erstreckungsbereich der Ringkammer hinweg bis zur Ringkammerwand 23 und in axialer Verlängerung aus der Ringkammer bis zu einem axialen Abstand b zur Ringkammerwand 23 zylindrisch ausgebildet. Ausgehend von einer Kreislinie im Abstand b zur Ringkammerwand 23 ist die radial äußere Mantelfläche des Füllrings 12 in axialer Richtung nach außen parallel zur Innenseite 25 des Felgenhorns ebenfalls unter Einschluß des Winkels α zur Radachse nach axial außen hin konisch erweitert ausgebildet. Der Füllring erstreckt sich ebenso wie das Felgenhorn noch über einen Abstand a von der Ringkammerwand 23 axial nach außen. Der Füllring 12 ist axial verschiebbar auf einer zylindrischen Lagerfläche 30 der Felge gelagert. Im Innern der Ringkammer bildet die Lagerfläche 30 die radial innere Ringkammerwand 20. Nach axial außen erstreckt sich die Lagerfläche 30 bis in einen Abstand d von der Ringkammerwand 23. Axial außerhalb des Abstandes d ist der Füllring nach radial innen zu einer Schulter verdickt ausgebildet und liegt mit dieser an einer korrespondierend ausgebildeten Schulter der Felge an. Die Abstände a,b,d sind so gewählt, daß a größer als d und d größer als b ist. Der Winkel α liegt zwischen 2 und 20°. Im gezeichneten Ausführungsbeispiel liegt er bei ca. 10°. Auf diese Weise umschließen der Wulst mit seiner Verdickung 7 und der sich anschließende untere Seitenwandbereich 16 zwischen innerer Felgenhornfläche 25 und Füllring das Felgenhorn zwangsgeführt, wodurch die Verankerung des Reifens in der Felge zusätzlich gesichert wird.

Der Füllring ist aus Gummi oder aus einem elastischen Kunststoff mit selbsthemmender Oberfläche ausgebildet. Es ist auch denkbar, den Füllring aus einem nichtelastischen Kunststoff oder Metall herzustellen. Soweit im Einzelfall erforderlich, ist es auch möglich, den Füllring im montierten Zustand mit seiner Schulter an der korrespondierenden Schulter der Felge beispielsweise durch Verschraubung zusätzlich axial zu fixieren.

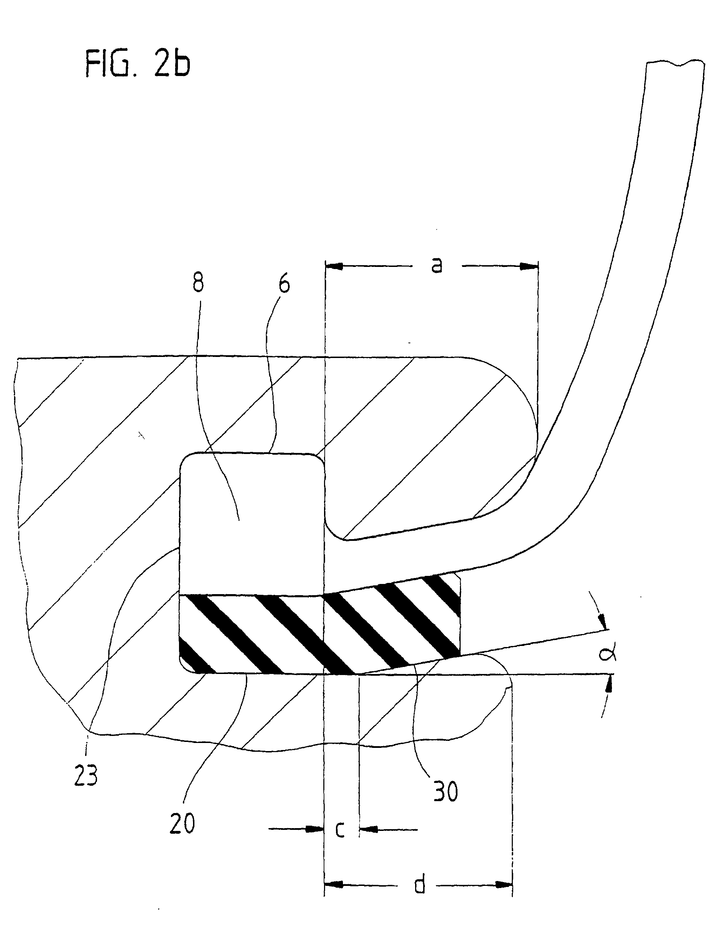

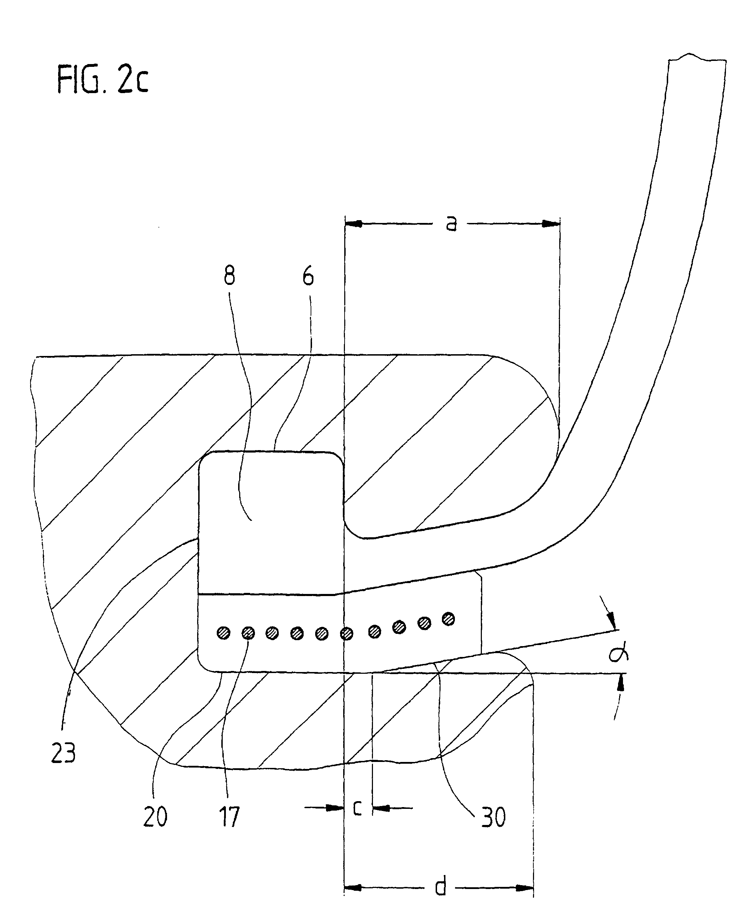

In den Fig.2b und 2c sind alternative Ausführungen des Füllrings 12 dargestellt. Die Lagerfläche 30 erstreckt sich axial bis zu einem Abstand c, der kleiner oder gleich dem Abstand a ist, von der Ringkammerseitenwand 23 nach außen. Die radial äußere Mantelfläche des Füllrings ist ab der axialen Position der Ringkammerseitenwand 23 ebenfalls konisch unter dem Steigungswinkel α verlaufend ausgebildet. Die radial Innere Mantelfläche des Füllrings ist ebenso wie die korrespondierend ausgebildete Lagerfläche 30 ab einer axialen Position im Abstand c von der Ringkammerseitenwand nach axial außen ebenso unter dem Winkel α zur Radachse konisch erweitert ausgebildet. Der Abstand c ist kleiner a. Durch diese konische Ausbildung wird der elastische Füllring in seiner montierten Position zusätzlich durch axialen Formschluß gesichert.

In Fig2c ist ein Füllring wie in Fig2b dargestellt, der jedoch im elastischen Gummi- oder Kunststoffmaterial eingebettete im wesentlichen in Umfangsrichtung verlaufende Festigkeitsträger 17 enthält. Die Festigkeitsträger geben dem Füllring zusätzlichen Halt auf der Lagerfläche 30. Die Festigkeitsträger 17 können mehrere nebeneinander angeordnete in Umfangsrichtung gewickelte zugfeste Festigkeitsträger sein. In einer anderen Ausführung ist ein oder mehrere nebeneinander angeordnete Festigkeitsträger kontinuierlich wendelförmig um die Achse des Füllrings von einem axialen Ende zum anderen axialen Ende des Füllrings gewickelt. Die Abstände zwischen den benachbarten Wicklungen sind äquidistant. Soweit zur Erzielung einer noch sichereren Fixierung des Füllrings auf der Lagerfläche 30 sinnvoll, können die Abstände auch unterschiedlich gewählt sein. Die Festigkeitsträger sind Monofilamente oder Multifilamente aus Stahl. In einer anderen Ausführung sind die Festigkeitsträger textile Monofilamente oder Multifilamente. Es ist auch denkbar die Festigkeitsträger 17 aus Gewebestreifen auszubilden. Die Verstärkung des Füllrings 12 durch Festigkeitsträger in der beschriebenen Art ist auch beim Ausführungsbeispiel von Fig.2a möglich.

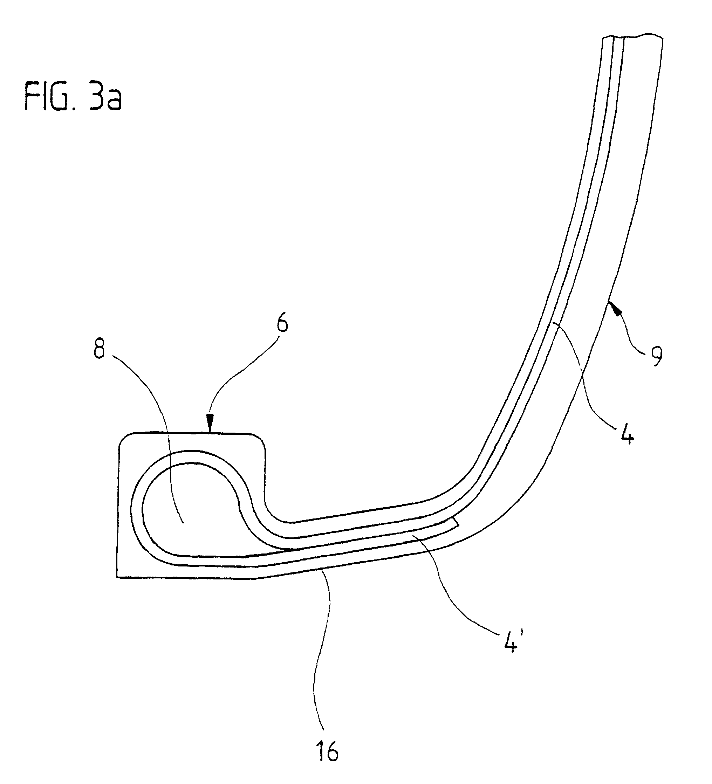

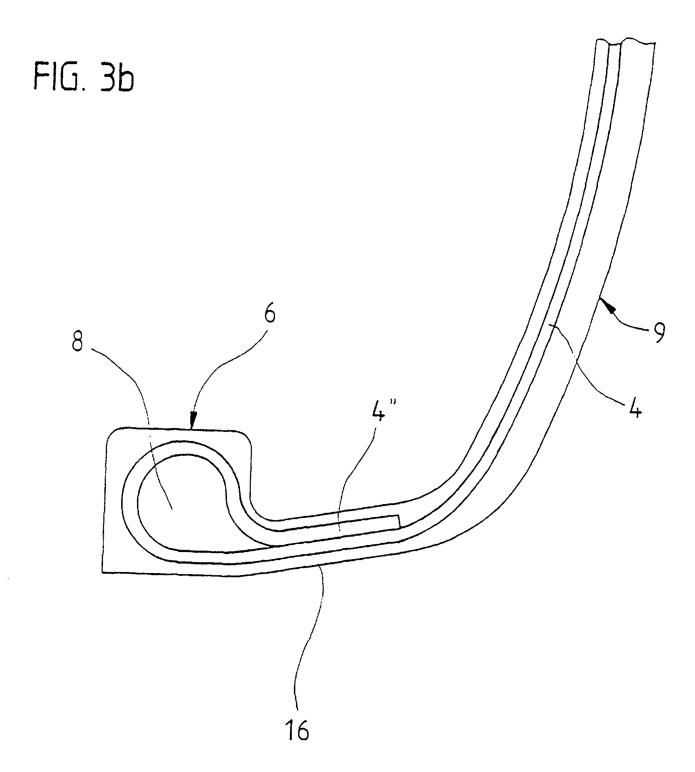

Der Wulstkern 8 wird, wie in den Fig.1,2 und 3a dargestellt ist, durch Einbettung des Kerns 8 in die Karkasse 4 durch Umschlag der Karkasse 4 um den Kern von innen nach außen oder, wie im Ausführungsbeispiel von Fig. 3b dargestellt ist, von außen nach innen verankert. Die Karkasse 4 ist eng um den Kern 8 gewickelt und der Umschlag 4' ist ebenso wie im anderen Ausführungsbeispiel der Umschlag 4" im Anschluß an den Kern 8 in unmittelbarem Kontakt zum Hauptteil der Karkasse. Der Kern 8 ist tröpfchenförmig zum Berührungspunkt zwischen Umschlag und Hauptteil der Karkasse verjüngt ausgebildet. Zur Ausbildung des Kerns 8 wird ein elastisches Gummimaterial mit einer Shore-A-Härte von 80 bis 100, vorzugsweise 85 bis 90 - im Ausführungsbeispiel von Figur 1 mit einer Shore-A-Härte von 87 ― gewählt, das eine elastische Dehnbarkeit in Umfangsrichtung des Kerns von 5 bis 30%, für Standard-Reifendimensionen von 10 bis 20%, und eine elastische Stauchbarkeit von1 bis 5%, für Standard-Reifendimensionen von 2,5 bis 3,5 Prozent, aufweist.

Der Kern wird durch Extrusion, durch injection moulding oder vergleichsweise bekannte Techniken hergestellt.

Es ist auch denkbar, den Wulst kernlos auszubilden, wobei auch in diesem nichtdargestellten Ausführungsbeispiel das Gummimaterial des Wulstes so gewählt wird, daß der Wulst die genannten Dehnungs- und Stauchungseigenschaften in Umfangsrichtung aufweist.

Soweit der Abrieb zwischen Felgenhorn und unterer Seitenwand unerwünscht groß wird, ist es möglich, wie in Figur 1 und 2a beispielhaft dargestellt, zusätzlich zwischen Felgenhorn und Wulst einen zusätzlichen Streifen 13 von abriebfestem Material, beispielsweise von abriebfestem Gummi oder Kunststoff auszubilden. Der abriebfeste Streifen kann bis in die Ringkammer reichen und dort um den Wulst umgeschlagen sein.

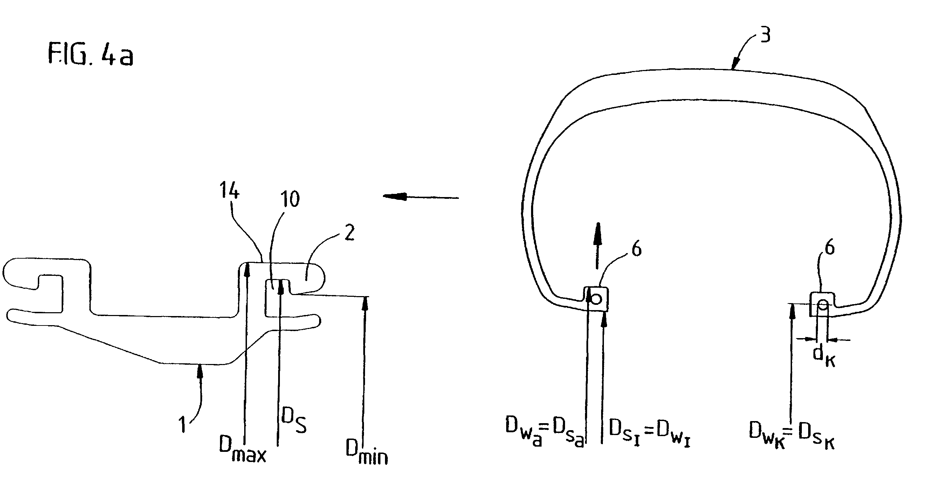

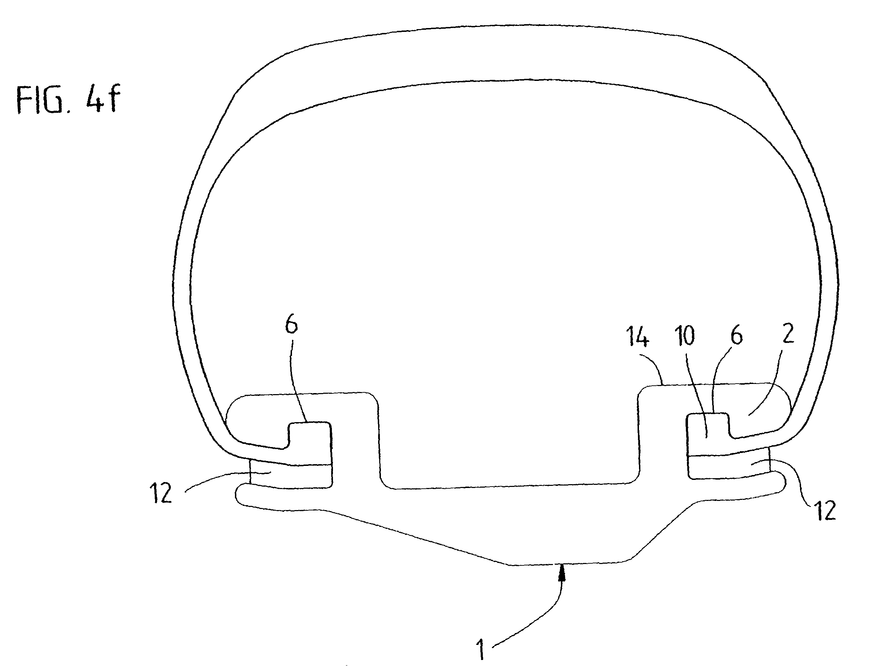

Anhand der schematischen Darstellungen der Figuren 4a bis 4e wird im Folgenden die Montage des Reifens auf einer Felge beschrieben. Die Notlaufstützflächen 14 weisen einen maximalen Außendurchmesser Dmax, die beiden Felgenhörner einen minimalen Innendurchmesser Dmin auf. Der Reifenwulst ist in Fig.4a im ungedehnten und ungestauchten Zustand. Sein Außendurchmesser Dwa entspricht dem Durchmesser der radial äußeren Ringkammerwand 22 und somit dem äußeren Durchmesser des Wulstes Dsa in dessen Sitzposition in der Ringkammer. Sein Innendurchmesser Dwi entspricht dem Durchmesser der radial äußeren Mantelfläche des Füllrings 12 in der Ringkammer und somit dem inneren Durchmesser des Wulstes Dsi in dessen Sitzposition in der Ringkammer. Der Kern mit einer Dicke d, beispielsweise ist d= 10mm, in radialer Richtung hat in der radialen Position der halben radialen Dicke einen mittleren Kerndurchmesser Dwk durch die Reifenachse, der dem mittleren Kerndurchmesser Dsk in der Sitzposition des Wulstes in der Ringkammer entspricht. Dmax ist größer als Dsa, Dsa ist größer als Dsk, Dsk ist größer als Dmin, Dmin ist größer als Dsi.

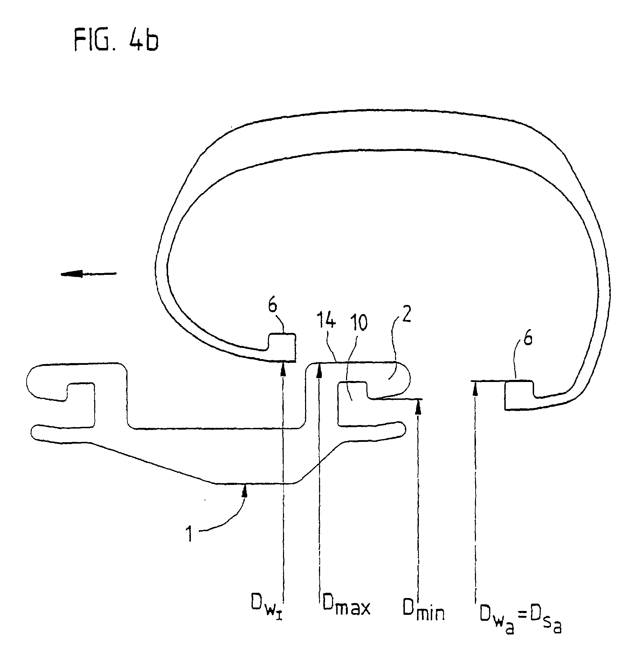

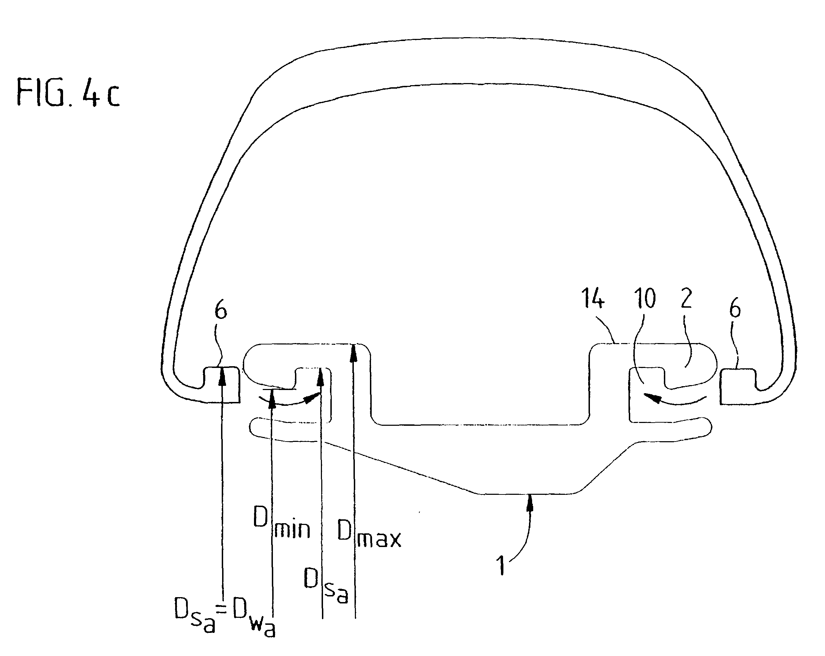

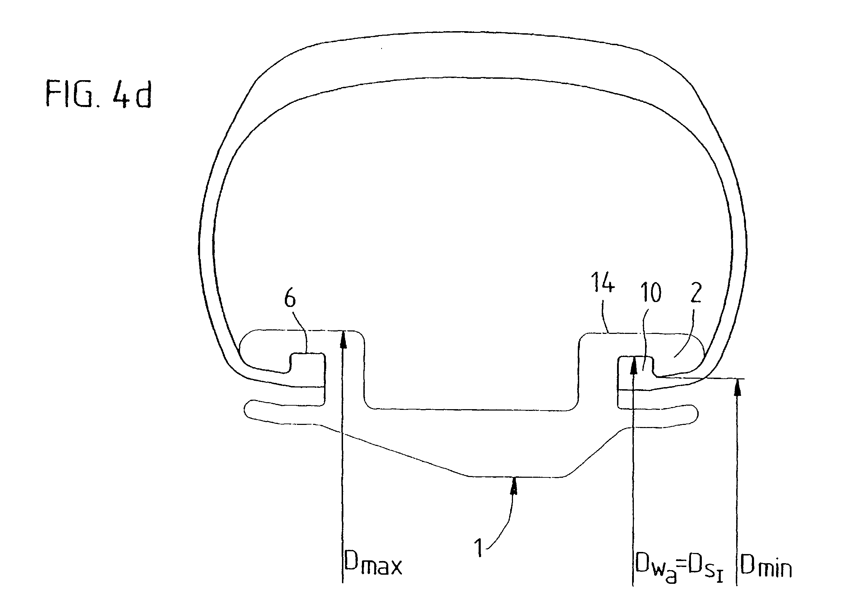

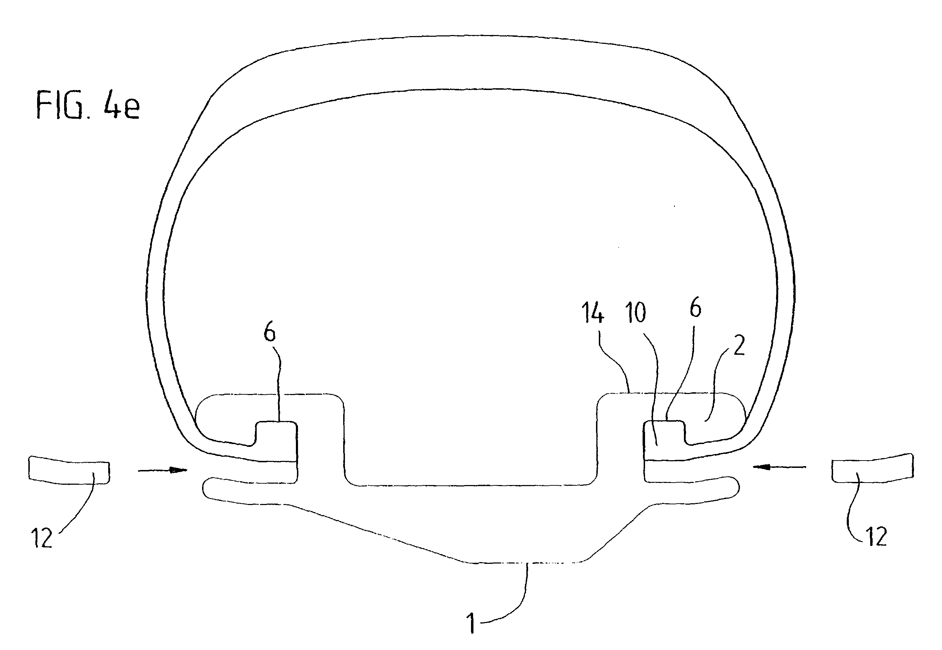

Zur Montage wird der Reifen 3 konzentrisch zur Felge an die Felge in den Figuren von rechts axial herangeführt. Der linke Wulst wird entgegen der elastischen Rückstellkräfte des Wulstes in Umfangsrichtung soweit gedehnt, daß der Innendurchmesser Dwi des Wulstes größer als der maximale Außendurchmesser Dmax der Notlaufstützflächen ist. Danach wird, wie in Figur 4b dargestellt ist, der Reifen 3 weiter konzentrisch zur Felge axial zur Felge hinbewegt, wobei der linke Wulst unter Beibehaltung seines gedehnten Zustandes mit Spiel zu den Notlaufstützflächen 14 axial über die Felge geschoben wird. Sobald der linke Wulst eine Position auf der linken Seite axial außerhalb des linken Felgenhorns erreicht hat wird der Wulst unter Ausnutzung der elastischen Rückstellkräfte wieder in seiner Umfangslänge soweit zurückgestellt, daß er wieder den ungedehnten und ungestauchten Zustand einnimmt. In diesem Zustand entspricht Dwi wieder Dsi, Dwa wieder Dsa und Dwk entspricht ebenfalls wieder dem mittleren Durchmesser Dsk des Kerns in dessen Sitzposition in der Ringkammer. Wie durch die Pfeildarstellung von Fig 4c dargestellt, werden beide Wülste nun entgegen der elastischen Rückstellkräfte in ihrer Umfangslänge soweit gestaucht, daß der Außendurchmesser Dwa des Wulstes kleiner als der minimale Felgenhorndurchmesser Dmin ist.ln diesem Zustand werden die Wülste mit Spiel zum Felgenhorn axial in die jeweilige Ringkammer eingeführt. Unter Ausnutzung der elastischen Rückstellkräfte werden die Wülste wieder in ihrer Umfangslänge soweit zurückgestellt, daß sie wieder den ungedehnten und ungestauchten Zustand einnehmen. In diesem Zustand entspricht Dwi wieder Dsi, Dwa wieder Dsa und Dwk entspricht ebenfalls wieder dem mittleren Durchmesser Dsk des Kerns in dessen Sitzposition in der Ringkammer. Die Wülste sitzen ungedehnt und ungestaucht in der Ringkammer. Dieser Zustand ist in Fig.4d dargestellt. Wie in Fig4e dargestellt ist, wird nun jeweils ein Füllring 12 von axial außen zwischen unterem Seitenwandbereich 16 des Reifens und Lagerfläche 30 axial soweit eingeführt, daß die Ringkammer vollständig von Wulst und Füllring ausgefüllt ist. Der vollständige Formschluß zwischen einstückiger Ringkammer und Wulst ist hergestellt.

Zur Demontage wird entsprechend zunächst der Füllring axial nach außen entfernt. Danach werden die Wülste soweit gestaucht, daß sie mit Spiel zum Felgenhorn aus der Ringkammer gezogen werden können. Nach der Rückstellung der Umfangslänge wird ein Wulst soweit gedehnt, daß er mit Spiel zu den Notlaufstützflächen axial von der Felge gezogen werden kann.

Es ist auch denkbar, den Reifen zur Montage anstatt ihn axial zu verschieben, zunächst um 90 ° zu drehen und dann zu dehnen und im gedehnten Zustand in radialer Richtung auf die Felge zu schieben, um ihn dort wieder um 90 ° zurückzudrehen, so daß sich die beiden Wülste jeweils axial außerhalb der Felge befinden. Die weitere Montage erfolgt wie oben beschrieben.

Im einem Ausführungsbeispiel ist der Durchmesser Dmax beispielsweise um das 1,2-fache größer als der Innendurchmesser Dsi des Wulstes in der Sitzposition in der Ringkammer und der minimale Felgenhorndurchmesser ist um den Faktor 1,025 kleiner als der Außendurchmesser Dsa des Wulstes in der Sitzposition in der Ringkammer. Als Gummimaterial des Wulstes wird ein Gummimaterial mit einer Dehnungsfähigkeit und mit einer Stauchbarkeit gewählt, die ein solches Dehnen und Stauchen des Wulstes in Umfangsrichtung erlauben, daß der Wulst über die Notlaufstützfläche 14 und in die Ringkammer mit Spiel axial bewegt werden können. Beispielsweise wird ein bekanntes Gummimaterial verwendet, das eine Umfangsdehnung des Wulstes um 25% und eine Umfangsstauchung um 2,7% ermöglichen.

Die Notlaufstützflächen können auch mit einem größeren oder kleineren maximalen Außendurchmesser Dmax entsprechend den individuell einzustellenden Notlaufeigenschaften eines Reifens ausgebildet sein. Der maximale Durchmesser Dmax der Notlaufstützflächen ist dabei bei Standardreifen optimalerweise um einen Faktor1,1 bis 1,2 größer als der Innenringdurchmesser Dsi des Wulstkerns im montierten Zustand des Fahrzeugrades. Er kann in Spezialfällen jedoch auch um einen Faktor zwischen 1,05 und 1,3 größer sein als der Innenringdurchmesser Dsi des Wulstkerns im montierten Zustand des Fahrzeugrades. Als Gummimaterial des Wulstes wird hierfür jeweils ein Gummimaterial mit einer Dehnungsfähigkeit und mit einer Stauchbarkeit gewählt, die ein solches Dehnen und Stauchen des Wulstes in Umfangsrichtung erlauben, daß der Wulst über die Notlaufstützfläche 14 und in die Ringkammer mit Spiel axial bewegt werden können. Dementsprechend wird der Wulst, der im montierten Zustand des Fahrzeugrades ungedehnt und ungestaucht ist, derart ausgebildet, daß er eine Dehnbarkeit zwischen 10 und 20 % und eine Stauchbarkeit von 2,5 bis 3,5 % bei Standardreifen und in den Spezialfällen eine Dehnbarkeit zwischen 5 und 30 % und eine Stauchbarkeit zwischen aufweist 1 bis 5% aufweist.

Es ist auch denkbar nach Einführen des Wulstes in die Ringkammer einen Füllring durch Einpritzen von aushärtbarem Kunststoffmaterial von axial außen durch die Öffnung der

### Bezugszeichenliste

- 1: Felge
- 2: Felgenhorn
- 3: Fahrzeugluftreifen
- 4: Karkasse
- 5: Gürtel
- 6: Wulstbereich
- 7: Verdickung
- 8: Kern
- 9: Seitenwand
- 10: Ringkammer
- 11: Notlaufsattel
- 12: Füllring
- 13: Abriebfester Streifen
- 14: Notlaufsatteloberfläche
- 15: Lauffläche
- 16: unterer Seitenwandbereich
- 17: Festigkeitsträger
- 20: Ringkammerwand
- 21: Ringkammerwand
- 22: Ringkammerwand
- 23: Ringkammerwand
- 24: Ringöffnung
- 25: Innenseite des Felgenhorns
- 26: Stirnfläche des Felgenhorns
- 30: Lagerfläche

## Patentansprüche

1. Fahrzeugrad mit - insbesondere einteiliger - Felge (1) und schlauchlosem Luftreifen (3), das für Notlauf geeignet ist,
- mit auf der radial äußeren Mantelfläche der Felge (1) ausgebildeter Notlaufstützfläche (14),
- mit an jeder Seitenwand (19) des Luftreifens (3) zur Innenseite des Luftreifens (3) hin verdickt ausgebildetem in seiner Umfangslänge - insbesondere elastisch - veränderbarem Wulst (6) zur Befestigung des Luftreifens (3) an der Felge (1),
- mit wenigstens in einer axialen Stirnseite der Felge einstückig ausgebildeter Ringkammer (10) mit einer radial inneren (20), einer radial äußeren (22), einer axial zur Felgenmitte hin inneren (21) und einer axial zur Felgenaußenseite hin äußeren (23) Ringkammerwand, wobei die nach radial innen , nach radial außen und nach axial innen zur Felgenmitte hin ausgebildeten Ringkammerwände (20, 22, 21) geschlossen und die nach axial außen zur Stirnseite der Felge (1) hin ausgebildete Ringkammerwand (23) im radial äußeren Bereich als ein radial nach innen gerichtetes Felgenhorn (2) geschlossen ausgebildet und in ihrem radial inneren Bereich (24) offen ausgebildet ist,
- wobei ein Füllring (12) innerhalb der Ringkammer (10) auf der radial inneren Ringkammerwand (23) radial fest gelagert ist,
- wobei die Seitenwand (9) des Reifens (3) sich von axial außen durch die Öffnung (24) in der axial außen ausgebildeten Ringkammerwand (23) hindurch nach innen erstreckt und der Wulst (6) in der Ringkammer auf der radialen Außenseite des Füllrings (12) radial fest gelagert ist und in formschlüssigem Berührkontakt zur radial äußeren (22), zur axial inneren (21) und zur axial äußeren (23) geschlossenen Ringkammerwand ausgebildet ist, sodaß der Wulst (6) nach radial außen, nach axial außen, nach axial innen und über den Füllring nach radial innen formschlüssig mit der einstückig ausgebildeten Ringkammer verbunden ist, **dadurch gekennzeichnet, daß** sich die Notlaufstützfläche (14) axial soweit nach innen erstreckt, daß der Gürtel (5) in seinen axialen Randzonen von jeder Schulter mit 10 bis 30 % überdeckt ist.

2. Fahrzeugrad gemäß Anspruch 1,wobei der Wulst (6) über seine ganze axiale Erstreckung nach radial innen vollständig auf dem Füllring (12) aufliegt.

3. Fahrzeugrad gemäß den Merkmalen von einem oder mehreren der vorangegangenen Ansprüche, wobei der Wulst (6) und der Füllring (12) die Ringkammer (10) vollständig ausfüllen.

4. Fahrzeugrad gemäß den Merkmalen von wenigstens einem der Ansprüche 1 ― 3,
wobei die axiale Position der in der radial äußeren Mantelfläche ausgebildeten Notlaufstützfläche (14) zumindest teilweise der axialen Position des in der Felge (1) befestigten Wulstes (6) entspricht.

5. Fahrzeugrad gemäß den Merkmalen von wenigstens einem der Ansprüche 1 ― 4, wobei im Wulst (6) ein Gummikern (8) integriert ausgebildet ist,
wobei der Gummikern (8) insbesondere mit einer Shore -A- Härte aus dem Bereich von 80 bis 100, bevorzugt aus dem Bereich zwischen 85 bis 90 ausgebildet ist.

6. Fahrzeugrad gemäß den Merkmalen von wenigstens einem der Ansprüche 1 ― 4,
wobei der Wulst (6) kernlos ausgebildet ist.

7. Fahrzeugrad gemäß den Merkmalen von einem oder mehreren der vorangegangenen Ansprüche
wobei der Füllring (12) zum Lösen und/oder zum Befestigen des Wulstes (6) axial bewegbar ausgebildet ist,
wobei die Ringkammer (10) an ihrer radial inneren Seite über ihre gesamte axiale Erstreckung als Lagerfläche zum axialen Aufschieben und zum axialen Abziehen des Füllrings (12) ausgebildet ist und
wobei der Füllring (12) an seiner radial inneren Seite als korrespondierende Lagerfläche ausgebildet ist.

8. Fahrzeugrad gemäß den Merkmalen von einem oder mehreren der vorangegangenen Ansprüche,
wobei sich der Füllring (12) in seiner Befestigungsposition in der Ringkammer (10) axial durch die Öffnung nach außen erstreckt

9. Fahrzeugrad gemäß den Merkmalen von Anspruch 7,
wobei der Füllring (12) mit seiner radial äußeren Mantelfläche in seiner Erstreckung außerhalb der Ringkammer (10) der Kontur des Reifens folgend ausgebildet ist.

10. Fahrzeugrad gemäß den Merkmalen von Anspruch 5,
wobei der Füllring (12) mit seiner radial äußeren Mantelfläche in seiner Erstreckung außerhalb der Ringkammer (10) konisch erweitert ausgebildet ist.

11. Fahrzeugrad gemäß den Merkmalen von Anspruch 7,
wobei der Füllring (12) mit seiner radial äußeren Mantelfläche in seiner Erstreckung außerhalb der Ringkammer (10) der Kontur der Felge (1) folgend ausgebildet ist, wobei der Luftreifen im Innern durch die Felge (1) und außen durch den Füllring (12) gestützt ist.

12. Fahrzeugrad gemäß den Merkmalen von einem der vorangegangenen Ansprüche,
wobei der Füllring (12) mit seiner radial äußeren Mantelfläche in seiner Erstreckung innerhalb der Ringkammer (10) zylindrisch ausgebildet ist.

13. Fahrzeugrad gemäß den Merkmalen von einem der vorangegangenen Ansprüche,
bei dem der maximale Durchmesser der Notlaufstützflächen (14) um einen Faktor zwischen 1,05 und 1,3 ― insbesondere zwischen 1,1 und 1,2 ― größer als der Innenringdurchmesser des Wulstkerns (8) im montierten Zustand des Fahrzeugrades beträgt.

14. Fahrzeugrad gemäß den Merkmalen von einem der vorangegangenen Ansprüche,
wobei der Wulstkern (8) eine Dehnbarkeit und/oder Stauchbarkeit von 5 bis 30 % - insbesondere 10 bis 20 % - aufweist.

15. Fahrzeugrad gemäß den Merkmalen von einem der vorangegangenen Ansprüche,
wobei der Wulstkern (8) eine Dehnbarkeit von 5 bis 30 % -insbesondere 10 bis 20 % - und eine Stauchbarkeit von 1 bis 5% - insbesondere von 2,5 bis 3,5 % - aufweist und
wobei der Wulstkern, insbesondere im montierten Zustand des Fahrzeugrades, ungedehnt und ungestaucht ist.

16. Fahrzeugrad gemäß den Merkmalen von einem der vorangegangenen Ansprüche,
wobei der Luftreifen mit seinem Wulst (6) an der Felge (1) befestigt ist und im unteren Seitenwandbereich an der Felge (1) anliegt.

17. Fahrzeugrad gemäß den Merkmalen von einem der vorangegangenen Ansprüche,
wobei der Füllring (12) aus einem oder mehreren gummierten - insbesondere um die Achse des Füllrings (12) wendelförmig gewickelten - Festigkeitsträger ausgebildet ist.
wobei jeder Festigkeitsträger textiler Art oder aus Stahl monofilamentartig oder multifilamentartig oder aus Gewebe ausgebildet ist.

18. Verfahren zur Montage eines Fahrzeugrades nach einem der Ansprüche 1 bis 17
- wobei der Reifen zunächst mit seinem Wulst in die zur Aufnahme des Wulstes ausgebildete Ringkammer eingeführt wird und
- wobei der Reifen dann mit einem axial auf der Felge beweglichen Füllring durch axiale Bewegung des Füllrings radial zwischen einer Lagerfläche in der Ringkammer der Felge und dem Wulst in axialen und radialen Formschluß nach radial außen und axial innen zu den Kammerwänden, nach axial außen zum Felgenhorn der Ringkammer und nach radial innen zum Füllring gebracht und somit in der Ringkammer befestigt wird.

## Claims

1. Vehicle wheel having a rim (1), more especially a one-piece rim, and a tubeless pneumatic tyre (3) which is suitable for emergency use, and having
- an emergency support surface (14) formed on the radially outer surface of the rim (1),
- a bead (6) on each side wall (19) of the tyre (3), which is configured thickened towards the internal side of the tyre (3) and can be adjusted, especially elastically, in its peripheral length, for securing the tyre (3) to the rim (1),
- an annular chamber (10) formed as one piece in at least one axial face of the rim and comprising a radially internal wall (20), a radially external wall (22), an axially internal wall (21) in relation to the rim centre and an axially external wall (23) in relation to the rim exterior, the annular chamber walls (20, 22, 21) formed radially internally, radially externally, and axially internally in relation to the rim centre, being configured closed and the annular chamber wall (23) formed axially externally in relation to the face of the rim (1) being configured closed in the radially external region as a rim flange (2) oriented radially towards the inside, and being configured open in its radially internal region (24),
- wherein a filler ring (12) is mounted in a radially fixed manner inside the annular chamber (10) on the radially internal annular chamber wall (23),
- wherein the side wall (9) of the tyre (3) extends axially from the outside through the opening (24) in the annular chamber wall (23) formed axially externally, towards the inside, and the bead (6) is mounted in a radially fixed manner in the annular chamber on the radial outside of the filler ring (12) and is configured in a positive-fit contact with the radially external (22), axially internal (21) and axially external (23) closed annular chamber wall, such that the bead (6) is connected in a positive fit radially towards the outside, axially towards the outside, axially towards the inside and via the filler ring radially towards the inside with the one-piece annular chamber, **characterised in that** the emergency support surface (14) extends so far towards the inside that the belt (5) is 10 to 30% covered in its axial edge zones of each shoulder.

2. Vehicle wheel according to claim 1, wherein, over its entire axial length radially towards the inside, the bead (6) rests completely on the filler ring (12).

3. Vehicle wheel according to the features of one or more of the preceding claims, wherein the bead (6) and the filler ring (12) completely fill the annular chamber (10).

4. Vehicle wheel according to the features of at least one of claims 1-3, wherein the axial position of the emergency support surface (14) formed in the radially external surface corresponds at least partially to the axial position of the bead (6) secured in the rim (1).

5. Vehicle wheel according to the features of at least one of claims 1-4, wherein a rubber core (8) is formed as an integral part of the bead (6),
wherein the rubber core (8) is formed especially with a Shore A hardness in the region of 80 to 100, preferably in the region between 85 and 90.

6. Vehicle wheel according to the features of at least one of claims 1-4, wherein the bead (6) is configured without a core.

7. Vehicle wheel according to the features of one or more of the preceding claims,
wherein the filler ring (12) is configured axially moveable for detaching and/or securing the bead (6),
wherein the annular chamber (10) is configured on its radially internal side over its entire axial length as a bearing surface for pushing on the filler ring axially and for removing it axially, and
wherein the filler ring (12) is configured on its radially internal side as a corresponding bearing surface.

8. Vehicle wheel according to the features of one or more of the preceding claims,
wherein, in its securing position in the annular chamber (10), the filler ring (12) extends axially towards the outside through the opening.

9. Vehicle wheel according to the features of claim 7, wherein the filler ring (12) is configured to follow the contour of the tyre with its radially external surface where it extends outside the annular chamber (10).

10. Vehicle wheel according to the features of claim 5, wherein the filler ring (12) is configured widened in a conical manner with its radially external surface where it extends outside the annular chamber (10).

11. Vehicle wheel according to the features of claim 7, wherein the filler ring (12) is configured to follow the contour of the rim (1) with its radially external surface where it extends outside the annular chamber (10), the tyre being supported internally by the rim (1) and externally by the filler ring (12).

12. Vehicle wheel according to the features of one of the preceding claims, wherein the filler ring (12) is configured cylindrical with its radially external surface where it extends inside the annular chamber (10).

13. Vehicle wheel according to the features of one of the preceding claims, in which the maximum diameter of the emergency support surfaces (14) is greater by a factor of between 1.05 and 1.3, more especially between 1.1 and 1.2, than the internal annular diameter of the bead core (8) in the mounted state of the vehicle wheel.

14. Vehicle wheel according to the features of one of the preceding claims, wherein the bead core (8) has an expandability and/or compressibility of between 5 and 30%, more especially between 10 and 20%.

15. Vehicle wheel according to the features of one of the preceding claims, wherein the bead core (8) has an expandability of between 5 and 30%, more especially between 10 and 20%, and a compressibility of between 1 and 5%, more especially between 2.5 and 3.5%, and wherein the bead core, especially in the mounted state of the vehicle wheel, is unexpanded and uncompressed.

16. Vehicle wheel according to the features of one of the preceding claims, wherein the tyre is secured with its bead (6) to the rim (1) and in its lower side wall region abuts against the rim (1).

17. Vehicle wheel according to the features of one of the preceding claims, wherein the filler ring (12) is formed from one or more rubber-coated strengtheners, especially strengtheners wound in a helical manner about the axis of the filler ring (12), each strengthener being of a textile type or formed from steel in a monofilament or multifilament manner, or formed from a woven fabric.

18. Method of mounting a vehicle wheel according to one of claims 1 to 17,
- wherein the tyre is introduced first with its bead into the annular chamber formed to receive the bead, and
- wherein the tyre is then brought with a filler ring, which is axially moveable on the rim, by axial movement of the filler ring radially between a bearing surface in the annular chamber of the rim and the bead into an axial and radial positive fit radially towards the outside and axially towards the inside in relation to the chamber walls, axially towards the outside in relation to the rim flange of the annular chamber and radially towards the inside in relation to the filler ring, and thus secured in the annular chamber.

## Revendications

1. Roue de véhicule comportant une jante (1) - en particulier réalisée une seule pièce - et un pneumatique (3) sans chambre, convenant pour un roulage de secours,
- avec une surface d'appui de roulage de secours (14), réalisée sur la surface radialement extérieure de la jante (1),
- avec, sur chaque paroi latérale (19) du pneumatique (3), un bourrrelet (6), épaissi en direction du côté intérieur du pneumatique (3), dont la longueur circonférentielle est modifiable - en particulier élastiquement - pour assurer la fixation du pneumatique (3) sur la jante (1),
- avec au moins une chambre annulaire (10), réalisée d'une seule pièce dans une face frontale axiale de la jante, avec une paroi de chambre annulaire radialement intérieure (20), une paroi de chambre annulaire radialement extérieure (22), une paroi de chambre annulaire (21) axialement intérieure par rapport au centre de jante et une paroi de chambre annulaire (23) extérieure axialement par rapport à la face extérieure de jante, les parois de chambre annulaires (20, 22, 21), radialement intérieure, radialement extérieure et axialement intérieure par rapport au centre de jante, étant fermées et la paroi de chambre annulaire (23), axialement extérieure par rapport à la face frontale de la jante (1), étant fermée dans la zone radialement extérieure, sous la forme d'une joue ou rebord de jante (2) orientée radialement vers l'intérieur, et ouverte à sa zone radialement intérieure (24),
- un anneau de remplissage (12) étant monté radialement rigidement à l'intérieur de la chambre annulaire (10), sur la paroi de chambre annulaire radialement intérieure (23),
- la paroi latérale (9) du bandage (3) s'étendant vers l'intérieur, depuis un endroit axialement extérieur, en traversant l'ouverture (24) ménagée dans la paroi de chambre annulaire (23) axialement extérieure, et le bourrelet (6) étant monté radialement rigidement dans la chambre annulaire, sur la face extérieure radiale de l'anneau de remplissage (12), et étant en contact, avec une liaison par ajustement de forme, envers la paroi de chambre annulaire radialement extérieure (22), la paroi de chambre annulaire axialement intérieure (21) et la paroi de chambre annulaire (23) axialement extérieure fermée,de sorte que le bourrelet (24) soit relié à la chambre annulaire réalisée d'une seule pièce, par une liaison à ajustement de forme, en direction radiale vers l'extérieur, axiale vers l'extérieur, axiale vers l'intérieur et, par l'intermédiaire de l'anneau de remplissage, radiale vers l'intérieur, **caractérisée en ce que** la surface d'appui de roulage de secours (14) s'étend axialement vers l'intérieur, sur une distance faisant que la ceinture (5) est recouverte par chaque épaulement, dans ses zones de bordure axiales, sur 10 à 30 %.

2. Roue de véhicule selon la revendication 1, le bourrelet (6) s'appliquant, sur la totalité de son étendue axiale, radialement vers l'intérieur, complètement sur l'anneau de remplissage (12).

3. Roue de véhicule selon les caractéristiques d'une ou plusieurs des revendications précédentes, le bourrelet (6) et l'anneau de remplissage (12) remplissant complètement la chambre annulaire (10).

4. Roue de véhicule selon les caractéristiques d'au moins l'une des revendications 1 à 3, la position axiale de la surface d'appui de roulage de secours (14), réalisée dans la surface d'enveloppe radialement extérieure, correspondant au moins partiellement à la position axiale du bourrelet (6) fixé dans la jante (1).

5. Roue de véhicule selon les caractéristiques d'au moins l'une des revendications 1 à 4, un noyau en caoutchouc (8) étant réalisé dans le bourrelet (6), le noyau en caoutchouc (8) étant réalisé en particulier avec une dureté Shore-A dans la fourchette de 80 à 100, de préférence dans la fourchette comprise entre 85 à 90.

6. Roue de véhicule selon les caractéristiques d'au moins l'une des revendications 1 à 4, le bourrelet (6) étant réalisé sans noyau.

7. Roue de véhicule selon les caractéristiques d'une ou plusieurs des revendications précédentes, l'anneau de remplissage (12) étant réalisé de façon à être déplaçable axialement, dans le but de désolidariser et/ou de fixer le bourrelet (6),
la chambre annulaire (10), sur sa face radialement intérieure, sur la totalité de son étendue axiale, étant réalisée sous la forme de surface de palier pour l'enfilement axial et pour l'extraction axiale de l'anneau de remplissage, et
l'anneau de remplissage (12) étant réalisé sur sa face radialement intérieure en tant que surface de palier correspondante.

8. Roue de véhicule selon les caractéristiques d'une ou plusieurs des revendications précédentes, l'anneau de remplissage (12), lorsqu'il est à sa position de fixation, s'étendant vers l'extérieur, dans la chambre annulaire (10), en passant axialement par l'ouverture.

9. Roue de véhicule selon les caractéristiques de la revendication 7, la surface d'enveloppe radialement extérieure de l'anneau de remplissage (12) étant réalisée, dans son étendue extérieure à la chambre annulaire (10), de façon à suivre le contour du bandage.

10. Roue de véhicule selon les caractéristiques de la revendication 5, la surface d'enveloppe radialement extérieure de l'anneau de remplissage (12), dans son étendue extérieure à la chambre annulaire (10), étant élargie de façon conique.

11. Roue de véhicule selon les caractéristiques de la revendication 7, la surface d'enveloppe radialement extérieure de l'anneau de remplissage (12) étant configurée, dans son étendue extérieure à la chambre annulaire (10), de façon à suivre le contour de la jante (1), le bandage étant soutenu, à l'intérieur, par la jante (1) et, à l'extérieur, par l'anneau de remplissage (12).

12. Roue de véhicule selon les caractéristiques d'une des revendications précédentes, la surface d'enveloppe radialement extérieure de l'anneau de remplissage (12) étant cylindrique, dans son étendue située à l'intérieur de la chambre annulaire (10).

13. Roue de véhicule selon les caractéristiques d'une des revendications précédentes, dans laquelle le diamètre maximal des surfaces d'appui de roulage de secours (14) est supérieur, de la valeur d'un facteur compris entre 1,0 et 1,3 - en particulier entre 1,1 et 1,2 - au diamètre annulaire intérieur du noyau de bourrelet (6), lorsque la roue de véhicule est à l'état monté.

14. Roue de véhicule selon les caractéristiques d'une des revendications précédentes, le noyau de bourrelet (8) présentant une capacité d'extension ou une capacité d'écrasement de 5 à 30 %, en particulier de 10 à 20 %.

15. Roue de véhicule selon les caractéristiques d'une des revendications précédentes, le noyau de bourrelet (8) ayant une capacité d'extension de 5 à 30 % - en particulier de 10 à 20 % - et une capacité d'écrasement de 1 à 5 % - en particulier de 2,5 à 3,5 % - et le noyau de bourrelet, en particulier lorsque la roue de véhicule est à l'état monté, étant à l'état non étiré et non écrasé.

16. Roue de véhicule selon les caractéristiques d'une des revendications précédentes, le pneumatique étant fixé par son bourrelet (6) sur la jante (1) et appuyant sur la jante (1) dans la zone de paroi latérale inférieure.

17. Roue de véhicule selon les caractéristiques d'une des revendications précédentes, l'anneau de remplissage (12) étant réalisé à partir d'un ou plusieurs supports de résistance caoutchoutés, en particulier enroulés en hélice autour de l'axe de l'anneau de remplissage (12) - sachant que chaque support de résistance est de type textile ou en acier, monofilament, ou de type multifilaments ou sous forme d'un tissu.

18. Procédé de montage d'une roue de véhicule selon l'une des revendications 1 à 17,
- le bandage étant d'abord inséré par son bourrelet dans la chambre annulaire configurée pour recevoir le bourrelet, et
- le bandage étant ensuite placé, avec un anneau de remplissage mobile axialement sur la jante, par un déplacement axial de l'anneau de remplissage, radialement entre une surface de palier dans la chambre annulaire de la jante et le bourrelet, de façon à être en liaison par ajustement de forme axiale et radiale, radialement vers l'extérieur et axialement vers l'intérieur par rapport aux parois de chambres, axialement vers l'extérieur par rapport à la joue de jante de la chambre annulaire, et radialement vers l'intérieur par rapport à l'anneau de remplissage, et ainsi fixé dans la chambre annulaire.
